# EUROPEAN PATENT SPECIFICATION

(11) **EP 2 236 865 B1**
(45) Date of publication and mention of the grant of the patent: **15.04.2015**
(21) Application number: 08871921.6
(22) Date of filing: 18.12.2008
(51) Int. Cl.: F16J 15/10, H04M 1/02, F16J 15/06, H04M 1/18

(54) **GASKET**
DICHTUNG
JOINT STATIQUE

(30) Priority: 30.01.2008 JP 2008019473
(43) Date of publication of application: 06.10.2010
(73) Proprietor: Nippon Mektron Ltd., Tokyo 105-8585 (JP)
(72) Inventor: HAYASHI, Takahiro, Fujisawa-shi Kanagawa 251-0042 (JP)
(74) Representative: TBK
(86) International application number: PCT/JP2008/073057
(87) International publication number: WO 2009/096111

(56) References cited:
- JP-A- 6 213 326
- JP-A- 2002 195 411
- JP-A- 2003 148 244
- JP-A- 2006 029 364
- JP-A- 2007 205 384
- JP-U- S6 275 262

## Description

### BACKGROUND OF THE INVENTION

### Field of the Invention

The present invention relates to a gasket corresponding to one kind of a sealing device. The gasket in accordance with the present invention is used, for example, as a waterproof seal for a mobile device such as a mobile telephone, or a small electric/electronic device.

### Description of the Conventional Art

In recent years, there is a circumstance that a downsizing of a device has advanced in a field of a mobile device such as a mobile telephone or the like, and a deterioration of strength due to thinning is unavoidable as to a casing which is important for the sake of a waterproofing. Accordingly, there may occur a problem that the casing is deformed by reaction force at a time of compressing the gasket.

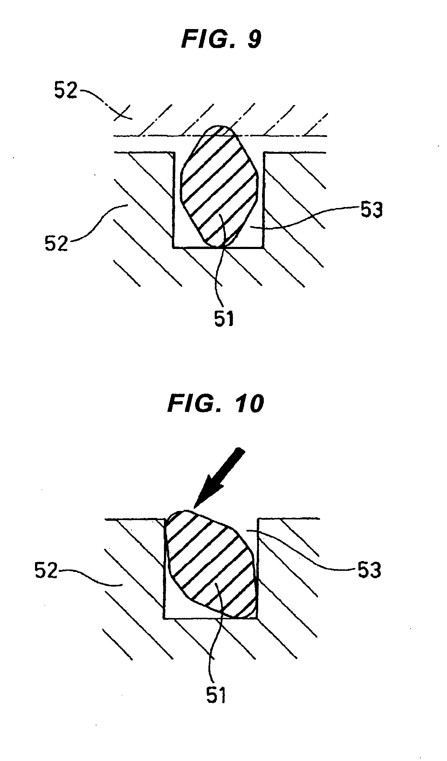

Under the circumstance mentioned above, it is possible to hold reaction force causing a deformation of a casing 52 down to the minimum while maintaining high surface pressure necessary for sealing, by forming a cross sectional shape of a gasket 51 into a hexagon as shown in Fig. 9. However, since stability at a time of mounting is lowered in this case, there is a disadvantage that the gasket 51 falls within a mounting groove 53 as shown in Fig. 10.

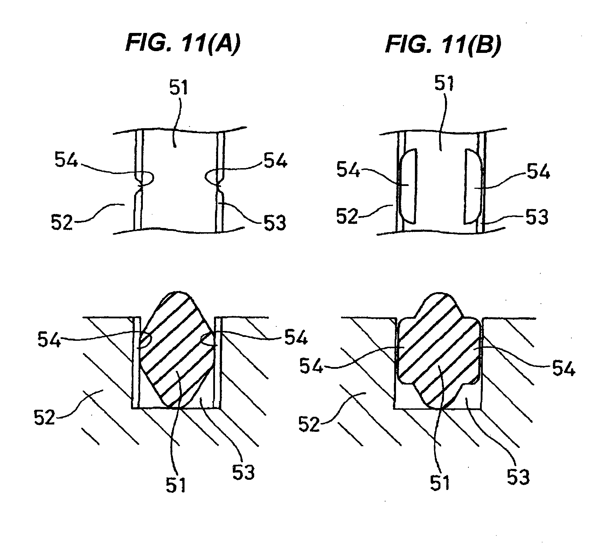

Then, there has been thought an improvement idea for preventing the gasket 51 from falling by providing protrusions 54 on side faces of the mounting groove 53 as shown in Fig. 11A, or an improvement idea for preventing the gasket 51 from falling by providing protrusions 54 on side faces of the gasket 51 as shown in Fig. 11B as is mentioned in JP S62 75262 U disclosing a gasket according to the preamble of claim 1. However, in accordance with these improvement ideas, in the case that the gasket 51 is used as a waterproof seal of the mobile device or the like and a cross sectional area thereof is set to be extremely small, there occurs a problem that reaction force is increased by rise of filling rate due to the addition of the protrusions 54, a problem that mounting workability to the mounting groove 53 is significantly deteriorated by narrowing of a clearance between the gasket 51 and the side faces of the mounting groove 53, or the like.

### SUMMARY OF THE INVENTION

### Problem to be Solved by the Invention

The present invention is made by taking the above points into consideration, and an object of the present invention is to provide a gasket, in which the gasket can be prevented from falling within a mounting groove, a filling rate does not rise so much, reaction force does not increase, and a mounting workability is good. Further, anobject of the present invention is to provide a gasket which can generate proper surface pressure even if the gasket is inserted in a state of being inclined.

### Means for Solving the Problem

In order to achieve the object mentioned above, in accordance with the present invention, there is provided a gasket mountable to a mounting groove provided in one member of two mutually opposite members, and brought into close contact with a bottom face of the mounting groove and an opposite face of the other member in the two members, wherein side faces of the gasket are provided with protrusions which can interfere with side faces of the mounting groove so as τo prevent falling at a time when the gasket is going to fall within the mounting groove, a height position of upper portions of the protrusions is set to a height position which is more than 80 % of a groove height and is not less than 70 % and not more than 95 % of a gasket height, and a height position of lower portions of the protrusions is set to a height position which is not less than 40 % of the gasket height.

Further, in accordance with claim 2 of the present invention, there is provided a gasket as described in claim 1 mentioned above, wherein the gasket is used as a waterproof seal for a mobile device or a small electric/electronic device.

In the present invention having the structure mentioned above, the side faces of the gasket are provided with the protrusions for preventing the falling, where these protrusions are arranged so as to be biased to the upper portion in the gasket cross section, that is, the height position of the upper portions of the protrusions is set to the height position which is more than 80 % of the groove height and is not less than 70 % and not more than 95 % of the gasket height, and the height position of the lower portions of the protrusions is set to the height position which is not less than 40 % of the gasket height. In this case, the upper portion of the protrusion means an upper end portion or an upper face portion of the protrusion in a state in which the mounting groove is open toward the upper side and the gasket is inserted to the mounting groove (without being compressed by the other member), and the height position thereof means a height position from the groove bottom face. The groove height means a height (a depth) of the mounting groove, and the gasket height means a height of the gasket. Further, the lower portion of the protrusion means a lower end portion or a lower face portion in a state in which the mounting groove is open toward the upper side and the gasket is inserted to the mounting groove (without being compressed by the other member), and the height position thereof means a height position from the groove bottom face. Accordingly, in the present invention, since the protrusions are provided only on the upper portion at the groove open side in the gasket cross section, and are not provided on the lower portion, and gap spaces are set around the lower portion side faces, a filling rate is held down to be small.

### Effect of the Invention

Therefore, in accordance with the present invention, since the filling rate of the gasket with respect to the mounting groove can be held down to be small, generated reaction force becomes small, and it is possible to effectively prevent the mounting member (the other member or/and one member in two members) from being deformed by the reaction force. The mounting member is a casing, for example, in the mobile device such as the mobile telephone or the like, and the casing has been downsized and thinned noticeably in recent years, and thus tends to be deformed. Accordingly, it is possible to effectively prevent deformation of such an easily deformable member or a brittle member as mentioned above.

Further, in accordance with the present invention having the structure mentioned above, with regard to a mounting workability to the mounting groove, since the protrusions are provided only on the upper portion of the gasket, and are not provided on the lower portion, and the gap spaces are set around the lower portion side faces, it is possible to hold down an influence to the mounting workability to the minimum. In other words, since the lower portion of the gasket is easily inserted to the mounting groove, it becomes easy to insert the upper portion following the insertion of the lower portion.

Further, in accordance with the present invention having the structure mentioned above, since the protrusions are provided on the side faces of the gasket, the protrusions interfere with the side faces of the mounting groove if the gasket is going to fall within the mounting groove. Accordingly, since the gasket does not fall within the mounting groove and seal surface pressure is secured, it is possible to maintain a sealing performance.

Particularly, in the case that the gasket in accordance with the present invention is used as a waterproof seal for a mobile device or a small electric/electronic device in which a cross section of the mounting groove is small and a cross section of the gasket is also small, it is possible to obtain the operation and effect as mentioned above in such the small device.

### BRIEF EXPLANATION OF DRAWINGS

Fig. 1 is a general perspective view showing a mounting state of a gasket in accordance with an embodiment of the present invention;
Fig. 2 is a cross sectional view along a line A-A in Fig. 1 and is a cross sectional view of the gasket;
Fig. 3 is a cross sectional view showing a state in which the gasket is going to fall;
Fig. 4 is an explanatory view showing constructing elements of the gasket;
Fig. 5A is a cross sectional view of a gasket main body (base) in a comparative test;
Fig. 5B is a cross sectional view of a mounting groove in the test;
Figs. 6A, 6B and 6C are cross sectional views of samples in respective examples;
Fig. 6D is a cross sectional view of a sample in accordance with a comparative example;
Fig. 7 is an explanatory view showing an external force input way in the test;
Figs. 8A and 8B are cross sectional views of a gasket in accordance with other embodiments of the present invention;
Fig. 9 is a cross sectional view of a gasket in accordance with a conventional art;
Fig. 10 is a cross sectional view showing a state in which the gasket falls; and
Figs. 11A and 11B are a partial plan view and a cross sectional view of a gasket in accordance with a conventional art to which a countermeasure against falling is applied.

### Description of Reference Numerals

1 gasket
2 gasket main body
2a, 2e seal lip
2b, 2d, 2f, 2h inclined face
2c, 2g, 3b vertical face
3 protrusion
3a lower face
3c upper face
11, 12 casing
12a opposite face
13 mounting groove
13a bottom face
13b side face
s gap space

### DETAILED DESCRIPTION OF PREFERRED EMBODIMENT

The following embodiments are included in the present invention.
(1) As conventional ideas for solving the problem, there have been methods of providing protrusions at a casing groove side, dropout preventing protrusions provided to a large-scaled O-ring or the like, and the like. However, since a filling rate rises, reaction force tends to be increased. Further, since clearances with the groove becomes short by providing of the protrusions, a mounting characteristic (an inserting characteristic) to the casing groove tends to be deteriorated.
(2) Then, in a shape of the present invention, it is possible to avoid a sacrifice of the surface pressure and the reaction force by providing the protrusions on the whole periphery or parts of the gasket upper portion. Further, with regard to the inserting characteristic, since the protrusions are provided only on the upper portion of the gasket, it is possible to hold down the influence to the inserting characteristic to the minimum.
(3) As for a condition under which the effect is recognized, the position of the protrusion upper faces is more than 80 % of the groove height, and is not less than 70 % and not more than 95 % of the gasket height. The position of the protrusion lower faces is not less than 40 % of the gasket height.
(4) It is possible to arrange the gasket in the center of the groove by providing the protrusions as mentioned above. Further, since the protrusions interfere with the groove wall even in the case that the external force to fall the gasket is applied at a time of mounting, it is possible to secure the seal surface pressure even when compressed in this state.
(5) In addition, in the present invention, a gasket shape (a cross sectional shape and a plan shape) and an aspect ratio are not limited at all.
(6) The present invention relates to an ultrasmall gasket (a micro gasket), and the ultrasmall gasket and a large-scaled gasket (for example, a cam cover gasket) have the following common point and different point.

### Common point

Depending on a mounting way, the gasket enters into the groove in a falling state. If the gasket is compressed in the falling state, the seal surface pressure is lowered. Accordingly, a falling prevention countermeasure is necessary.

### Different point

However, in the case of the ultrasmall gasket, since the groove itself is, of course, very small (is small in its volumetric capacity), it is hard, incomparably with the large-scaled gasket, to know whether or not the gasket is mounted to the groove bottom accurately at a time of mounting the gasket, or whether or not the gasket itself enters into the groove, (reason: since the groove is very small, it is impossible to feel that the gasket is mounted to the groove. In the case of the large-scaled gasket, since the gasket having the large cross section is mounted to the large groove, it is possible to sufficiently feel that the gasket is mounted to the groove (feel a sensation of mounting)).

Further, since the volume of the gasket itself is small, a rigidity thereof is small. Even if it is intended to provide buckling prevention protrusions (Fig. 11B) as a countermeasure thereof, a filling rate is increased, so that a compression ratio can not be secured. Accordingly, this countermeasure can not be employed.

As mentioned above, since the ultrasmall gasket has the small rigidity, it is hard to provide the buckling prevention protrusions in the ultrasmall gasket, and the ultrasmall gasket is mounted to the groove in a state of no feeling of mounting to the groove, a falling prevention countermeasure is necessary in the different light from the large-scaled gasket.

### Embodiment

Next, a description will be given of an embodiment in accordance with the present invention with reference to the accompanying drawings.

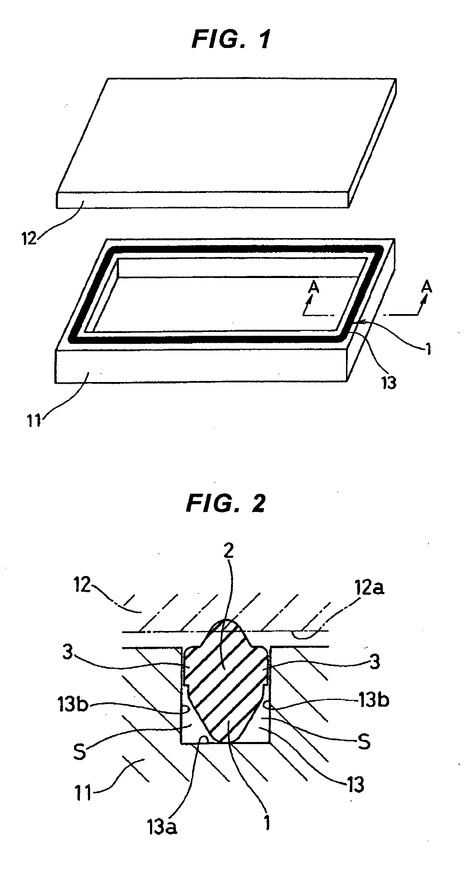

A gasket 1 in accordance with the embodiment is a gasket which is mounted to a mounting groove 13 provided in one member 11 of two mutually opposite members 11 and 12, and brought into close contact with a bottom face 13a of the mounting groove 13 and an opposite face 12a of the other member 12 in these two members 11 and 12, as shown in a general perspective view in Fig. 1 and a cross sectional view in Fig. 2 (a cross sectional view along a line A-A in Fig. 1). Two members 11 and 12 are, for example, a pair of casings (upper and lower cases) 11 and 12 of a mobile device such as a mobile telephone or the like, and are described hereunder as the casings 11 and 12.

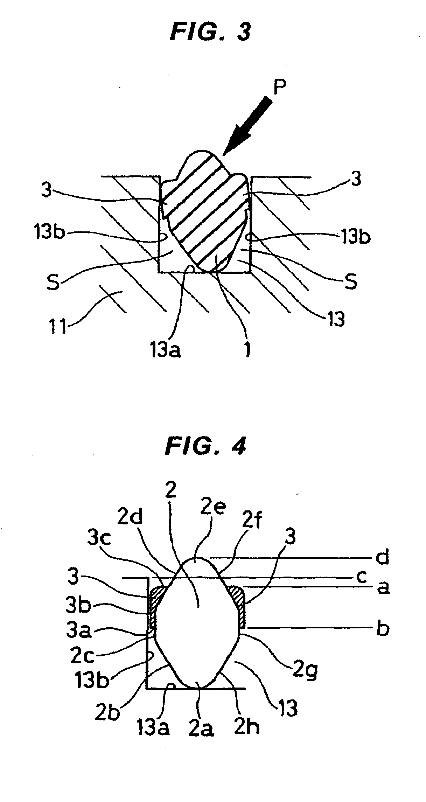

As shown in Fig. 2, protrusions 3 are provided on side faces of a gasket 1, and the protrusions 3 are structured such as to interfere with side faces 13b of the mounting groove 13 at a time when the gasket 1 is going to fall within the mounting groove 13 so as to prevent falling as shown in Fig. 3. The protrusions 3 are provided respectively on an inner peripheral face (a left side face in the figure) and an outer peripheral face (a right side face in the figure) of the gasket 1. A plurality of protrusions 3 may be provided in parts on the peripheries of the gasket 1, or an integral protrusion 3 may be provided all around the peripheries. Further, slight gaps are set between the protrusions 3 and the side faces 13b of the mounting groove 13 at a time when the gasket 1 stands erectly (is in a state in Fig. 2). However, the protrusions 3 may come into contact with the side faces 13b of the mounting groove 13 from the beginning of insertion. Further, the protrusions 3 are provided so as to be biased to an upper portion than the center in a height direction of the gasket 1 (a depth direction of the mounting groove 13).

Fig. 4 is a view for explaining the constructing elements of the gasket 1. Firstly, the gasket 1 has a gasket main body 2 having a hexagonal cross sectional shape as shown by an outline drawing, and the protrusions 3 are provided respectively on side faces, that is, an inner peripheral face and an outer peripheral face of the gasket main body 2 . The gasket main body 2 having the hexagonal cross sectional shape is formed in a point symmetrical cross sectional shape having a circular arc cross sectional shaped lower seal lip 2a coming into close contact with the bottom face 13a of the mounting groove 13, an inner peripheral side lower inclined face 2b, an inner peripheral side vertical face 2c, an inner peripheral side upper inclined face 2d, a circular arc cross sectional shaped upper seal lip 2e coming into close contact with the opposite face 12a of the other casing 12, an outer peripheral side upper inclined face 2f, an outer peripheral side vertical face 2g and an outer peripheral side lower inclined face 2h, and is provided with the protrusions 3 respectively on a position from the inner peripheral side vertical face 2c to the inner peripheral side upper inclined face 2d and a position from the outer peripheral side upper inclined face 2f to the outer peripheral side vertical face 2g among them, whereby the protrusions 3 are provided so as to be biased to the upper portion in the gasket cross section.

Further, the protrusions 3 themselves are formed in a cross sectional shape having a lower face (a lower side horizontal face) 3a, a vertical face 3b and an upper face (an upper side horizontal face) 3c, and are chamfered into a round shape between the vertical face 3b and the upper face 3c so as to avoid angulating.

The gasket 1 is formed by a rubber-like elastic material constructed by an elastically deformable rubber or a resin, or the like. Further, the gasket 1 is used as a waterproof seal in a mobile device such as a mobile telephone or the like, and a cross sectional area thereof is set to be extremely small (for example, 1 mm x 1 mm). The mounting groove 13 is formed in a rectangular cross sectional shape.

In the gasket 1 having the structure mentioned above, if the gasket 1 is going to fall within the mounting groove 13 by being exposed to external force P or the like as shown in Fig. 3, the protrusions 3 interfere with the side faces 13b of the mounting groove 13. Accordingly, since the gasket 1 does not fall within the mounting groove 13 and the seal surface pressure at the seal lips 2a and 2e is secured, it is possible to maintain a sealing performance.

Further, since the protrusions 3 are provided so as to be biased to the upper sides in the side faces of the gasket 1, comparatively large gap spaces s (refer to Fig. 2) are set around the lower portion side faces of the gasket 1. Accordingly, since a filling rate of the gasket 1 with respect to the mounting groove 13 is held down to be small, and generated reaction force is small, it is possible to prevent the casings 11 and 12 from being deformed by the reaction force.

Further, with regard to a mounting workability of the gasket 1 to the mounting groove 13 , since the protrusions 3 are provided so as to be biased to the upper sides in the side faces of the gasket 1, and the comparatively lager gap spaces are set around the lower portion side faces of the gasket 1, it is possible to hold down an influence to the mounting workability to the minimum. In other words, since the lower portion of the gasket 1 is not provided with the protrusion 3, has no insertion resistance and is easily inserted to the mounting groove 13, the upper portion is easily inserted following the insertion of the lower portion.

In this case, in accordance with the findings resulted from endeavors of the inventors of the present invention, it is necessary to set a height position a of the upper faces 3c of the protrusions 3 to a height position which is more than 80 % of a groove height c (0.8 8 < a/c ... expression (1)), and is not less than 70 % and not more than 95 % of a gasket height d (0.7 ≦ a/d ≦ 0.95 ... expression (2)), and to set a height position b of the lower faces 3a of the protrusions 3 to a height position which is not less than 40 % of the gasket height d (0.4 ≦ b/d ... expression (3)), in a state in which the gasket 1 shown in Fig. 4 is inserted to the mounting groove 13, in order to obtain the operation and effect as mentioned above. If the height position a of the upper faces 3c of the protrusions 3 is not more than 80 % of the groove height c, the gasket 1 tends to fall. If the height position a of the upper faces 3c of the protrusions 3 is less than 70 % of the gasket height d, the gasket tends to fall. If the height position a of the upper faces 3c of the protrusions 3 is larger than 95 % of the gasket height d, the seal surface pressure does not arise. If the height position b of the lower faces 3a of the protrusions 3 is less than 40 % of the gasket height d, the filling rate becomes high. One example of a comparative test will be shown as follows.

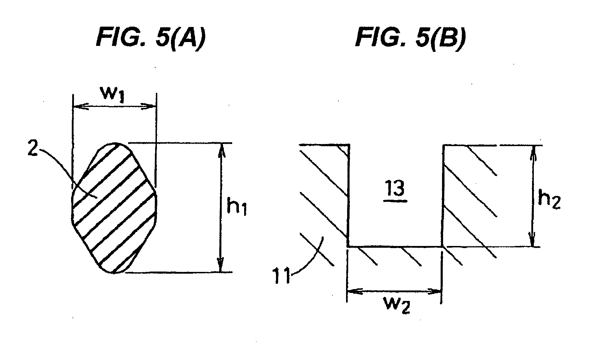

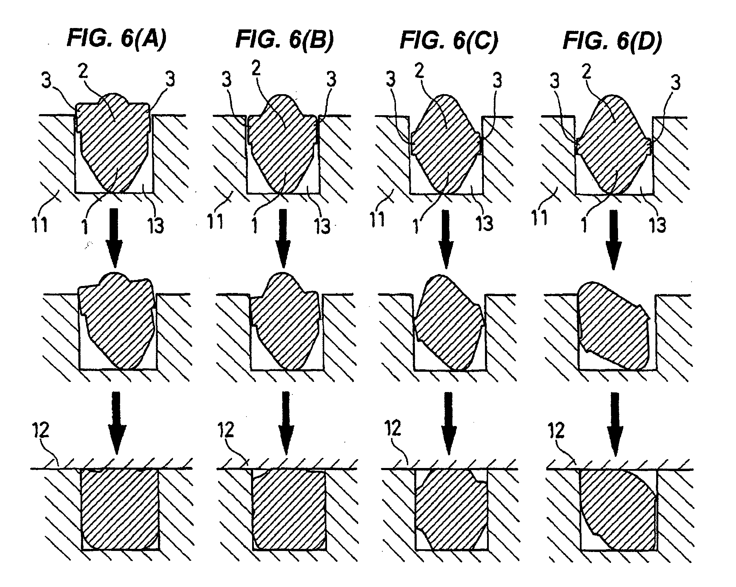

Using a gasket main body 2 having a hexagonal cross sectional shape with height h₁: 1.5 mm and width w₁: 0.9 mm shown in Fig. 5A as a base, the protrusions 3 are provided on this base in accordance with the following ways, whereby four samples (A) to (D) shown in the upper stage in Fig. 6 are prepared.
Sample (A): a/c = 1.15, a/d = 0.9, b/d = 0.6
Sample (B): a/c = 1, a/d = 0.8, b/d = 0.5
Sample (C): a/c = 0.85, a/d = 0.7, b/d = 0.4
Sample (D): a/c = 0.7, a/d = 0.55, b/d = 0.4

Among these samples (A) to (D), three samples (A), (B) and (C) satisfy the conditions of the expressions (1) to (3) mentioned above, and the sample (D) does not satisfy the conditions.

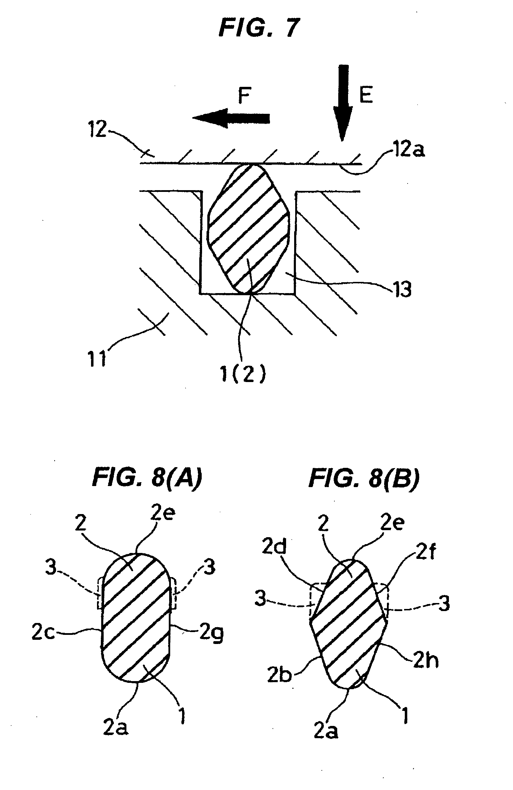

Accordingly, each of the samples (A) to (D) is inserted to a mounting groove 13 having a height (a depth) h₂: 1.2 mm and a width w₂: 1.1 mm as shown in Fig. 5B, predetermined external force is applied in accordance with the way in Fig. 7, and thereafter a mounting state of the gasket 1 is checked. According to the way in Fig. 7, the other casing 12 is set to be in a contact state with the gasket 1 inserted to the mounting groove 13, firstly the other casing 12 is displaced for 0.1 mm in a vertical direction from this state (an arrow E), and next it is displaced for 0.5 mm in a horizontal direction (an arrow F). In this case, the upper stage of Fig. 6 shows a state before the external force is applied, and the middle stage shows a state after the external force is applied.

As a result, the falling is recognized in the sample (D) in which the protrusions 3 are provided at the low position, however, the samples (A), (B) and (C) satisfying the conditions of the expressions (1) to (3) mentioned above maintain the stable state, since the protrusions 3 interfere with the side faces 13b, in spite of being inclined, as shown in each of figures at the middle stage in Figs. 6(A) to 6(D). In this case, "falling" means a state in which the upper portion inclined faces 2d and 2f come into contact with the groove side face 13b, and "inclining" means a state in which the gasket main body 2 is not in parallel to an axial direction. Further, if each of the samples (A) to (D) is compressed completely within the mounting groove 13, they become to be in the states as shown in respective figures in the lower stage of Fig. 6. In the sample (D) in which the protrusions 3 are provided at the low position, the surface pressure is not generated at the center in a width direction of the mounting groove 13. However, a proper surface pressure can be generated at the center in the width direction of the mounting groove 13, in the samples (A), (B) and (C) satisfying the conditions of the expressions (1) to (3) mentioned above.

In this case, in the present invention, the cross sectional shape of the gasket 1 (the gasket main body 2) is not particularly limited, but may be set, for example, to an oval shape, a rhombic shape and the like, in addition to the hexagonal shape mentioned above. In an embodiment shown in Fig. 8A, the gasket main body 2 is formed in an oval cross sectional shape having a circular arc cross sectional shaped lower portion seal lip 2a coming into close contact with the bottom face 13a of the mounting groove 13, an inner peripheral side vertical face 2c, a circular arc cross sectional shaped upper portion seal lip 2e coming into close contact with the opposite face 12a of the other casing 12, and an outer peripheral side vertical face 2g, and the protrusions 3 are provided on an upper portion of the inner peripheral side vertical face 2c and an upper portion of the outer peripheral side vertical face 2g among them, whereby the protrusions 3 are provided so as to be biased to the upper portion in the gasket cross section. Further, in the other embodiment shown in Fig. 8B, the gasket main body 2 is formed in a rhombic cross sectional shape having a circular arc cross sectional shaped lower portion seal lip 2a coming into close contact with the bottom face 13a of the mounting groove 13, an inner peripheral side lower portion inclined face 2b, an inner peripheral side upper portion inclined face 2d, a circular arc cross sectional shaped upper portion seal lip 2e coming into close contact with the opposite face 12a of the other casing 12, an outer peripheral side upper portion inclined face 2f and an outer peripheral side lower portion inclined face 2h, and the protrusions 3 are provided on the inner peripheral side upper portion inclined face 2d and the outer peripheral side upper portion inclined face 2f among them, whereby the protrusions 3 are provided so as to be biased to the upper portion in the gasket cross section.

## Claims

1. A gasket (1) mountable to a mounting groove (13) provided in one member (11) of two mutually opposite members (11, 12), and can be brought into close contact with a bottom face (13a) of said mounting groove (13) and an opposite face (12a) of the other member (12) in said two members (11, 12), wherein side faces of said gasket (1) are provided with protrusions (3) which can interfere with side faces of said mounting groove (13) so as to prevent falling at a time when said gasket is going to fall within said mounting groove (13), **characterized in that**
a height position of upper portions (3c) of said protrusions (3) is set to a height position which is more than 80 % of a groove height (c) and is not less than 70 % and not more than 95 % of a gasket height (d), and a height position (b) of lower portions (3a) of said protrusions (3) is set to a height position which is not less than 40 % of the gasket height (d).

2. A gasket (1) as claimed in claim 1, wherein said gasket (1) is used as a waterproof seal for a mobile device or a small electric/electronic device.

## Patentansprüche

1. Dichtung (1), die an eine Montagenut (13) montierbar ist, die in einem Element (11) von zwei einander gegenüberliegenden Elementen (11, 12) vorgesehen ist, und in engem Kontakt mit einer Bodenfläche (13a) der Montagenut (13) und einer entgegengesetzten Fläche (12a) des anderen Elements (12) bei den zwei Elementen (11, 12) gebracht werden kann, wobei Seitenflächen der Dichtung (1) mit Vorsprüngen (3) vorgesehen sind, welche mit Seitenflächen der Montagenut (13) eingreifen können, um so ein Fallen zu einer Zeit zu verhindern, wenn die Dichtung in der Montagenut (13) fallen wird, **dadurch gekennzeichnet, dass**
eine Höhenposition von oberen Abschnitten (3c) der Vorsprünge (3) auf eine Höhenposition festgesetzt ist, welche mehr als 80 % einer Nuthöhe (c) ist sowie nicht weniger als 70 % und nicht mehr als 95 % einer Dichtungshöhe (d) ist, und eine Höhenposition (b) von unteren Abschnitten (3a) der Vorsprünge (3) auf eine Höhenposition festgesetzt ist, welche nicht weniger als 40 % der Dichtungshöhe (d) ist.

2. Dichtung (1), wie in Anspruch 1 beansprucht, wobei die Dichtung (1) als eine wasserdichte Abdichtung für ein Mobilgerät oder ein kleines elektrisches/elektronisches Gerät verwendet wird.

## Revendications

1. Joint d'étanchéité (1) pouvant être monté dans une rainure de montage (13) prévue dans un élément (11) de deux éléments mutuellement opposés (11, 12), et peut être amené en contact étroit avec une face inférieure (13a) de ladite rainure de montage (13) et avec une face opposée (12a) de l'autre élément (12) dans lesdits deux éléments (11, 12), dans lequel des faces latérales dudit joint d'étanchéité (1) sont pourvues de saillies (3) qui peuvent interférer avec des faces latérales de ladite rainure de montage (13) de manière à empêcher la chute à un moment auquel ledit joint d'étanchéité va tomber dans ladite rainure de montage (13), **caractérisé en ce que**
une position de hauteur des parties supérieures (3c) desdites saillies (3) est réglée à une position de hauteur qui est supérieure à 80% d'une hauteur de rainure (c) et qui est supérieure ou égale à 70% et inférieure ou égale à 95% d'une hauteur de joint d'étanchéité (d), et une position de hauteur (b) des parties inférieures (3a) desdites saillies (3) est réglée à une position de hauteur qui est supérieure ou égale à 40% de la hauteur de joint d'étanchéité (d).

2. Joint d'étanchéité (1) tel que revendiqué dans la revendication 1, dans lequel ledit joint d'étanchéité (1) est utilisé en tant que joint étanche à l'eau pour un dispositif mobile ou un dispositif électrique/électronique de petite taille.
